# EUROPÄISCHE PATENTANMELDUNG

(11) **EP 2 774 726 A1**
(43) Veröffentlichungstag der Anmeldung: **10.09.2014**
(21) Anmeldenummer: 14156974.9
(22) Anmeldetag: 27.02.2014
(51) Int. Cl.: B25C 5/06, B25C 5/11, B25C 5/16, F24D 3/14

(54) **Setzgerät für Klammern**

(30) Priorität: 08.03.2013 DE 102013102350
(71) Anmelder: hpv Vertriebs GmbH, 6353 Going am Wilden Kaiser (AT)
(72) Erfinder: Puchinger, Herbert, 85414 Kirchdorf (DE)
(74) Vertreter: Kuhnen & Wacker

(57) **Zusammenfassung**

Die Erfindung betrifft ein Setzgerät (1) für Klammern, welche zur Befestigung von Fußbodenheizungsrohren o. dgl. an einem Untergrund in Gestalt einer Lochplatte o. dgl. dienen, mit einem Rahmen (2), welcher an einem Ende einen Handgriff (3) trägt und an seinem anderen Ende mit einem Setzabschnitt (5) verbunden ist, einem Magazin (7) für die Klammern, einen Zuführabschnitt (8), mittels dem die Klammern zum Setzabschnitt (5) zuführbar sind, und einem Setzstempel zum Setzen der Klammern, wobei vom Setzabschnitt (5) wenigstens ein Führungsstift (54) mit einem Kopf (55) zur Positionierung des Setzgeräts (1) am Untergrund übersteht. Beim erfindungsgemäßen Setzgerät (1) ist der Kopf (55) des wenigstens einen Führungsstifts (54) dabei gegenüber dem Setzabschnitt (5) beweglich. Damit lässt sich ein verbessertes Setzgerät erzielen, bei dem der Setzvorgang für Klammern effizienter und mit geringen Mühen durchführbar ist. Ferner wird durch die Erfindung auch ein verbessertes Verfahren zum Setzen von Klammern geschaffen.

## Beschreibung

Die Erfindung betrifft ein Setzgerät für Klammern, welche zur Befestigung von Fußbodenheizungsrohren o. dgl. an einem Untergrund in Gestalt einer Lochplatte o. dgl. dienen, mit einem Rahmen, welcher an einem Ende einen Handgriff trägt und an seinem anderen Ende mit einem Setzabschnitt verbunden ist, einem Magazin für eine Mehrzahl von Klammern, einen Zuführabschnitt, mittels dem die Klammern zum Setzabschnitt zuführbar sind, und einem Setzstempel zum Setzen der Klammern, wobei vom Setzabschnitt wenigstens ein Führungsstift mit einem Kopf zur Positionierung des Setzgeräts am Untergrund übersteht. Die Erfindung betrifft ferner ein Verfahren zum Setzen von Klammern zur Befestigung von Fußbodenheizungsrohren o. dgl. an einem Untergrund gemäß Anspruch 10.

Derartige Setzgeräte werden bei der Verlegung von Installationsrohren und insbesondere bei der Herstellung von Fußbodenheizungssystemen verwendet, bei denen Heizungsrohre auf Lochplatten oder dgl. verlegt werden. Hierzu werden zunächst Rohrhalter bzw. Klammern in den Lochplatten fixiert, welche dann anschließend als Halter für die Heizungsrohre dienen. Die Klammern weisen im Wesentlichen eine Form entsprechend einem "U" mit nach oben weisenden freien Enden der Schenkel auf. An dem waagerechten Verbindungsschenkel der U-förmigen Klammern ist ferner ein nach unten stehender Haltestift ausgebildet, der in die Lochplatte eingedrückt wird und eine Klemm- oder Rastverbindung herstellt. Derartige Klammern werden in einem vorbestimmten Abstand sowie in einem geeigneten Muster in großer Zahl an der entsprechenden Lochplatte positioniert, so dass die Heizungsrohre anschließend in geeigneter Schleifenführung in vorbestimmten Verlegeabständen der einzelnen Schleifen an der Lochplatte befestigt werden können.

Die entsprechenden U-förmigen Klammern werden dabei nacheinander durch die herkömmlichen Setzgeräte in die Lochplatte eingesetzt, was aufgrund der großen Anzahl der erforderlichen Klammern durchaus aufwändig und Zeit raubend ist. Daher wurden bereits Versuche unternommen, den entsprechenden Arbeitsablauf zu erleichtern.

Ein Beispiel hiefür findet sich in der EP 0 794 391 A1. Das hieraus bekannt gewordene Setzgerät weist eine gleichzeitig auch als Rahmen dienende Zuführung für die Klammern auf, an deren oberen Bereich ein Haltegriff für das Gerät und am unteren Ende ein Eindrückmechanismus für die Klammern angeordnet ist. Der Eindrückmechanismus ist hier mit einem per Fuß betätigbaren Setzstempel ausgebildet, der zum Eindrücken der Klammern dient. Die Klammern werden dabei einzeln nacheinander schwerkraftbedingt von der als Magazin dienenden Zuführung zum Setzstempel zugeführt und nach Positionierung des Setzgeräts durch die Fußbetätigung in das zugeordnete Loch der Lochplatte eingedrückt. Damit hier die Zuordnung des Haltestifts an der Klammer zum zugeordneten Loch einer Lochplatte erreicht werden kann, weist dieses bekannte Setzgerät in einem vorderen Bereich des Rahmenteils einen Zieldom auf, der als Führungsstift dient. Dieser ist starr an der dem Untergrund zuweisenden Oberfläche des Setzgeräts angeordnet und liegt in einem vorbestimmten Abstand zur vorgesehenen Position der Klammer vor. Im Einsatz wird dieser Zieldom dementsprechend in ein Loch der Lochplatte eingeführt, welches benachbart zur gewünschten Position der Klammer vorliegt. Da der entsprechende Abstand durch die Geometrie am Setzgerät vorgegeben ist, lässt sich dann per Fußbetätigung die Klammer in das gewünschte Loch der Lochplatte eindrücken.

Dieses bekannte Setzgerät hat sich in der Praxis durchaus bewährt. Allerdings hat sich gezeigt, dass dennoch weiterhin ein erheblicher Aufwand für das Setzen der Klammern erforderlich ist. So praktisch der Zieldom bei der Positionierung des Setzgeräts an sich erscheint, soviel Aufwand ist gleichzeitig jedoch auch erforderlich, um den Zieldom tatsächlich treffend in das gewünschte Loch der Lochplatte einzuführen. Trotz der Vorteile dieses bekannten Setzgeräts ist das Setzen von Klammern hiermit somit weiterhin eine Zeit raubende Tätigkeit, zumal das Einfädeln des Zieldoms in das entsprechende Loch eine gewisse Konzentrationsleistung erfordert. Zudem hat es sich bei diesem bekannten Setzgerät als nachteilig erwiesen, dass bereits eine geringe Verdrehung desselben trotz korrekt eingeführtem Zieldorn dazu führt, dass der Haltestift der jeweiligen Klammer nicht in das gewünschte Loch eingeführt werden kann.

Der Erfindung liegt daher die Aufgabe zu Grunde, ein gattungsgemäßes Setzgerät derart zu verbessern, dass damit der Setzvorgang für Klammern für Fußbodenheizungssysteme o. dgl. noch effizienter und mit geringeren Mühen durchführbar ist. Ferner soll durch die Erfindung ein verbessertes Verfahren zum Setzen von Klammern zur Befestigung von Fußbodenheizungsrohren o. dgl. geschaffen werden.

Diese Aufgabe wird durch ein Setzgerät mit den Merkmalen des Anspruches 1 gelöst. Dieses zeichnet sich insbesondere dadurch aus, dass der Kopf des wenigstens einen Führungsstifts gegenüber dem Setzabschnitt beweglich ist.

Durch diese bewegliche Ausgestaltung des Kopfes wird das Einfädeln desselben in das zugeordnete Loch der Lochplatte oder dergleichen erheblich erleichtert, da dieser sich automatisch dort fängt, sobald er in den Bereich eines Lochs eintritt. Dies erfolgt gegebenenfalls unter Durchführung einer Relativbewegung gegenüber dem Setzabschnitt, so dass der Einfügevorgang wesentlich einfacher durchführbar ist. Diese Relativbewegung des Kopfes beruht dabei auf einer elastischen, federelastischen oder mechanischen Ausweichbewegung des wenigstens einen Führungsstifts.

Eine derart bewegliche Ausgestaltung des Kopfes eines Führungsstifts gegenüber dem Setzabschnitt an einem Setzgerät für Klammern war im Stand der Technik nicht vorgesehen; nach bisher in der Praxis vorherrschender Meinung ging man davon aus, dass der Führungsstift starr ausgebildet sein muss, um exakt seine eigene Position gegenüber der Lochplatte zu bestimmen und damit auch die richtige Position für den Haltestift an der Klammer gegenüber dessen zugeordnetem Loch zu erreichen. Von dieser Sichtweise nimmt die vorliegende Erfindung nun Abkehr.

Erfindungsgemäß wurde nämlich nun erkannt, dass eine bewegliche Ausgestaltung des Kopfes des wenigstens einen Führungsstifts keineswegs problematisch im Hinblick auf die Zielgenauigkeit der Positionierung des Setzgeräts ist. Da der Führungsstift systemgemäß bis zu seiner Ankopplungsstelle an dem Setzabschnitt in die Lochplatte oder dergleichen am Untergrund eintritt, verringert sich der Bewegungsspielraum des Führungsstifts letztendlich mit zunehmender Eindringtiefe. Auch wenn der Kopf des Führungsstifts somit relativ große Einfädelbewegungen ausführen kann, führt er das Setzgerät entlang den Schaft des Führungsstifts dennoch zielsicher zur gewünschten Position.

Ferner ist es durch die bewegliche Ausgestaltung des Kopfes des wenigstens einen Führungsstifts auch ohne weiteres möglich, eventuelle Maßabweichungen in den Abständen der Löcher im Untergrund wirkungsvoll zu begegnen, so dass unabhängig von den gegebenen Toleranzen ein zielsicheres Einführen des Haltestifts in den Untergrund möglich ist.

Durch die erfindungsgemäßen Maßnahmen wird somit ein Setzgerät geschaffen, mit dem das Setzen von Klammern für Fußbodenheizungsrohren oder dergleichen erheblich erleichtert wird. Zugleich ist der Vorgang auch mit deutlich größerer Verarbeitungsgeschwindigkeit durchführbar. Dementsprechend lässt sich Arbeitszeit einsparen, was zu reduzierten Kosten führt.

Vorteilhafte Weiterbildungen des erfindungsgemäßen Setzgeräts sind Gegenstand der abhängigen Ansprüche 2 bis 9.

So kann ein Schaft des wenigstens einen Führungsstifts elastisch ausgebildet sein. Damit wird mit konstruktiv sehr einfachen Mitteln erreicht, dass der Kopf des Führungsstifts beweglich ist. Das erfindungsgemäße Setzgerät ist somit sehr robust ausgestaltbar, weist nur wenige Bestandteile auf und lässt sich kostengünstig bereitstellen.

Vom weiteren Vorteil ist es, wenn der wenigstens eine Führungsstift beweglich im Setzabschnitt gelagert ist. Alternativ oder ergänzend zu einem elastisch ausgebildeten Schaft am Führungsstift kann so eine in der Praxis sehr geeignete Beweglichkeit des Führungsstifts und insbesondere von dessen Kopf erzielt werden, wodurch sich der Einfädelungsvorgang in ein zugeordnetes Loch im Untergrund weiter vereinfachen lässt.

Ebenfalls alternativ oder ergänzend ist es ferner auch möglich, dass ein Schaft des wenigstens einen Führungsstifts axial verschiebbar im Setzabschnitt gelagert ist, und dass der Kopf des wenigstens einen Führungsstifts federnd gegenüber einer Grundfläche des Setzabschnitts vorgespannt ist. Auch hierdurch lässt sich der Einfädelungsvorgang für den wenigstens einen Führungsstift im Untergrund nochmals erleichtern. Der Kopf des wenigstens einen Führungsstifts kann dann nicht nur quer zur Einfügerichtung in die Lochplatte oder dergleichen ausweichen, sondern in gewissem Rahmen auch in Einfügerichtung, wodurch der Positioniervorgang erheblich erleichtert wird.

In einer bevorzugten Ausführungsform ist es ferner vorgesehen, dass wenigstens zwei Führungsstifte vom Setzabschnitt überstehen, wobei deren Abstand und Zuordnung einem Raster im Untergrund angepasst sind. Obwohl im Stand der Technik bereits das Einführen des einzelnen Zieldoms, d.h. von einem Führungsstift in das zugeordnete Loch der Lochplatte oder dergleichen durchaus problematisch war, sieht die Erfindung nun in einer Ausgestaltungsvariante erstmals vor, sogar wenigstens zwei Führungsstifte zu verwenden. Dies erscheint auf den ersten Blick als nachteilig, da sich hierdurch scheinbar die Problematik des Einfädelns der Führungsstifte verdoppelt. Dem wird jedoch erfindungsgemäß dadurch begegnet, dass die Köpfe der wenigstens zwei Führungsstifte nicht starr am Setzabschnitt befestigt sind, sondern beweglich. Durch diese bewegliche Ausgestaltung der Köpfe wird das Einfädeln derselben in das zugeordnete Loch der Lochplatte oder dergleichen aus den oben bereits erläuterten Gründen erheblich erleichtert. Darüber hinaus hat sich gezeigt, dass bei Verwendung von wenigstens zwei Führungsstiften trotz der Beweglichkeit der Köpfe aufgrund der Festlegung an wenigstens zwei Stellen eine sehr genaue Positionierung des Setzgeräts erreichbar ist, so dass dieses sehr schnell und zuverlässig positioniert werden kann, um eine Klammer treffsicher am Untergrund festzulegen. Ferner ist es durch die bewegliche Ausgestaltung der Köpfe der wenigstens zwei Führungsstifte auch besonders gut möglich, eventuellen Maßabweichungen in den Abständen der Löcher im Untergrund wirkungsvoll zu begegnen, so dass unabhängig von den gegebenen Toleranzen ein zielsicheres Einführen der Führungsstifte in den Untergrund möglich ist. Ein weiterer Vorteil des erfindungsgemäßen Setzgeräts liegt zudem darin, dass durch die wenigstens zwei Führungsstifte auch ein Verdrehen des Setzgeräts gegenüber dem Untergrund wirkungsvoll verhindert werden kann. Damit ist es anders als im nächstkommenden Stand der Technik zuverlässig vermieden, dass die Führungsstifte zwar in einem zugeordneten Loch des Untergrunds vorliegen, dennoch jedoch aufgrund einer Verdrehung des Setzgeräts das gewünschte Loch für den Haltestift der Klammer nicht aufgefunden wird. In einer bevorzugten Ausgestaltungsweise hiervon ist es vorgesehen, dass drei Führungsstifte vom Setzabschnitt überstehen. Es hat sich in praktischen Versuchen gezeigt, dass dann die größte Zielgenauigkeit zur Positionierung des Haltestifts an der Klammer über dem zugeordneten Loch im Untergrund erreicht wird. Damit lässt sich der Setzvorgang mit besonders großer Verarbeitungsgeschwindigkeit und unter sehr geringem Arbeitsaufwand durchführen.

Von weiterem Vorteil ist es, wenn der Setzstempel vom Handgriff aus betätigbar ist, wobei der Handgriff hierzu vorzugsweise mit einer Betätigungsstange zusammenwirkt, welche am Rahmen in Richtung zum Setzstempel axial verschiebbar gelagert ist. Dann ist zum Setzen der Klammern kein Bücken des Anwenders und auch keine Fußbetätigung et cetera erforderlich. Der Anwender kann somit stabil stehend unter sehr geringer körperlicher Belastung den Setzvorgang durchführen. Damit erleichtert sich das Setzen der Klammern weiter.

Wenn die Betätigungsstange federnd entgegen der Betätigungsrichtung am Rahmen vorgespannt ist, kehrt diese nach jedem Setzvorgang automatisch in ihre Ruheposition zurück, so dass hierfür kein Betätigungsaufwand von Seiten eines Anwenders erforderlich ist. Dieser muss lediglich Klammer für Klammer durch Niederdrücken des Handgriffs mit der Betätigungsstange in Richtung zum Untergrund einsetzen, so dass sich sehr effiziente Arbeitsabläufe ergeben.

Vom weiteren Vorteil ist es, wenn das Magazin mehrere Magazinelemente aufweist, welche abwechselnd mit dem Zuführabschnitt verbindbar sind. Dann kann eine besonders große Anzahl an Klammern im Magazin gelagert werden, so dass ein Nachfiillen nur in sehr großen Abständen erforderlich ist. Hierdurch erleichtert sich der Arbeitsvorgang weiter, da der Verarbeiter über längere Zeiträume hinweg ohne Unterbrechung eine große Anzahl von Klammern nach und nach setzen kann. In praktischen Versuchen hat sich gezeigt, dass hier die Anwendung von vier Magazinelementen für die täglichen Arbeitsabläufe besonders geeignet ist.

Wenn die Magazinelemente drehbar am Setzgerät gelagert sind, gelingt es mit geringem Aufwand, diese abwechselnd mit dem Zuführabschnitt zu verbinden. Damit ist ein schneller Wechsel von einem Magazinelement zum nächsten möglich, wodurch der Arbeitsvorgang noch effizienter durchführbar ist.

Gemäß einem weiteren Aspekt der vorliegenden Erfindung wird nach Anspruch 10 ein Verfahren zum Setzen von Klammern zur Befestigung von Fußbodenheizungsrohren o. dgl. an einem Untergrund in Gestalt einer Lochplatte oder dergleichen geschaffen, welches mittels dem erfindungsgemäßen Setzgerät ausgeführt wird. Dieses Verfahren weist die Schritte auf: Füllen des Magazins mit einer Mehrzahl von Klammern, Positionieren des Setzgeräts am Untergrund mit Hilfe von wenigstens einem Führungsstift, dessen Kopf gegenüber dem Setzabschnitt beweglich ist, so dass der Kopf des wenigstens einen Führungsstifts in ein Loch oder eine Vertiefung im Untergrund eingeführt wird, und Setzen einer Klammer durch Betätigung des Setzstempels.

Mit diesem Verfahren werden die oben anhand des Setzgeräts bereits erläuterten vorteilhaften Effekte in den Arbeitsabläufen erzielt. Insbesondere ist es hierdurch in erstaunlich kurzer Zeit möglich, mit geringem Arbeitsaufwand eine sehr große Anzahl an Klammern für Fußbodenheizungsrohre o. dgl. an einem Untergrund zu befestigen.

Die Erfindung wird nachfolgend in Ausführungsbeispielen anhand der Figuren der Zeichnung näher erläutert. Es zeigt:
- Fig. 1: das erfindungsgemäße Setzgerät;
- Fig. 2: eine perspektivische Unteransicht des Setzgeräts;
- Fig. 3: eine perspektivische Detailansicht des erfindungsgemäßen Setzgeräts; und
- Fig. 4: eine schematische Darstellung einer durch das erfindungsgemäße Setzgerät setzbaren Klammer.

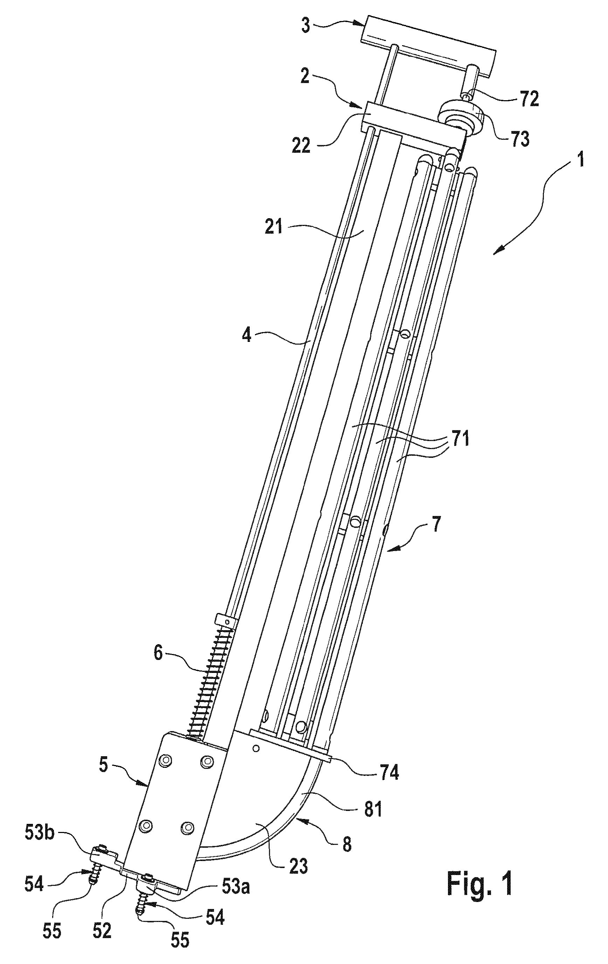

Gemäß der Darstellung in Fig. 1 weist ein Setzgerät 1 einen Rahmen 2 auf. Dieser enthält eine Längsstrebe 21 sowie eine Querstrebe 22. Ferner ist am Rahmen ein Magazinhalter 23 angeordnet.

Das Setzgerät 1 weist einen Handgriff 3 auf, welcher mit einer Betätigungsstange 4 zusammenwirkt, die in einem Setzabschnitt 5 mündet. Mittels einer Druckfeder 6 ist die Betätigungsstange 4 dabei in ihre Ruheposition vorgespannt, in welcher das Setzgerät 1 zum Eindrücken einer Klammer bereitsteht.

Das Setzgerät 1 weist ferner ein Magazin 7 und einen Zuführabschnitt 8 auf. Im Magazin 7 können eine große Anzahl an Klammern 9 aufgenommen werden, welche als Rohrhalter dienen und über den Zuführabschnitt 8 einzeln nach und nach in den Setzabschnitt 5 zugeführt werden.

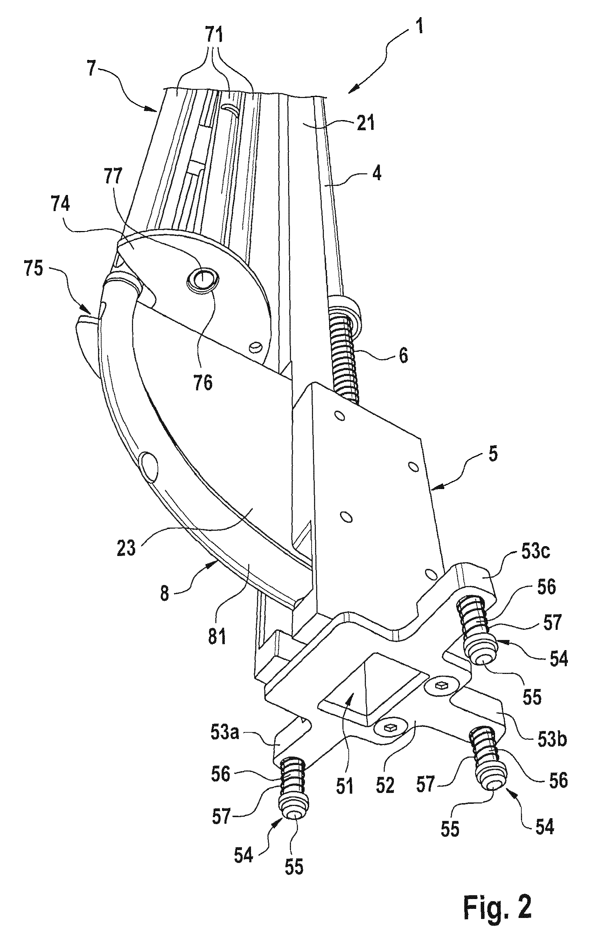

Der Setzabschnitt 5 weist einen Aufnahmeraum 51 auf, welcher insbesondere in Fig. 2 erkennbar ist. In diesen Aufnahmeraum 51 werden die Klammern 9 einzeln nacheinander eingeführt, damit sie dann durch einen hier nicht gezeigten Setzstempel an der Betätigungsstange 4 aus dem Setzabschnitt 5 heraus in ein vorbestimmtes Loch in einem Untergrund eingedrückt werden können. Der Setzstempel wird hier durch das untere Ende der Betätigungsstange 4 gebildet. Der Untergrund ist hier nicht dargestellt; er ist jedoch in herkömmlicher Weise nach Art einer Lochplatte oder dergleichen ausgebildet.

Der Setzabschnitt 5 weist ferner eine Auflageplatte 52 auf, welche im Einsatz auf der Oberfläche des Untergrunds aufliegt. Diese weist im gezeigten Ausführungsbeispiel drei Fixierarme 53a, 53b und 53c auf, welche anhand von daran gelagerten Führungsstifte 54 eine korrekte Positionierung des Setzgeräts 1 am Untergrund ermöglichen. Die Führungsstifte 54 weisen jeweils einen Kopf 55 auf, der zur Erleichterung des Einfädelns in Löcher im Untergrund konisch ausgebildet ist. Ein Schaft 56 der Führungsstifte 54 ist hierbei axial verschiebbar am Setzabschnitt 5 gelagert, wobei die Führungsstifte 54 jeweils mittels einer Feder 57 bis auf Anschlag so vorgespannt sind, dass deren Köpfe 55 im Ruhezustand maximal über die Auflageplatte 52 des Setzabschnitts 5 überstehen.

Die Führungsstifte 54 sind dabei in einem vorbestimmten Abstand und einer derartigen Zuordnung zueinander positioniert, dass sie in drei über Eck stehenden Löchern am Untergrund einfügbar sind. Damit ergibt sich automatisch eine korrekte Positionierung der mittels der Betätigungsstange 4 aus dem Aufnahmeraum 51 zum Setzen herausgedrückten Klammer 9 über dem gewünschten Loch im Untergrund.

Das Magazin 7 weist im vorliegenden Ausführungsbeispiel vier Magazinelemente 71 auf, welche drehbar um eine Führungsstange 72 angeordnet sind. Die Führungsstange 72 verbindet hierbei den Handgriff 3 mit dem Magazinhalter 23. Im Bereich des Handgriffs 3 ist ferner an der Führungsstange 72 in Anschlag 73 angeordnet, welcher den Bewegungsweg der Führungsstange 72 wie auch der Betätigungsstange 4 beim Eindrücken der Klammern 9 begrenzt.

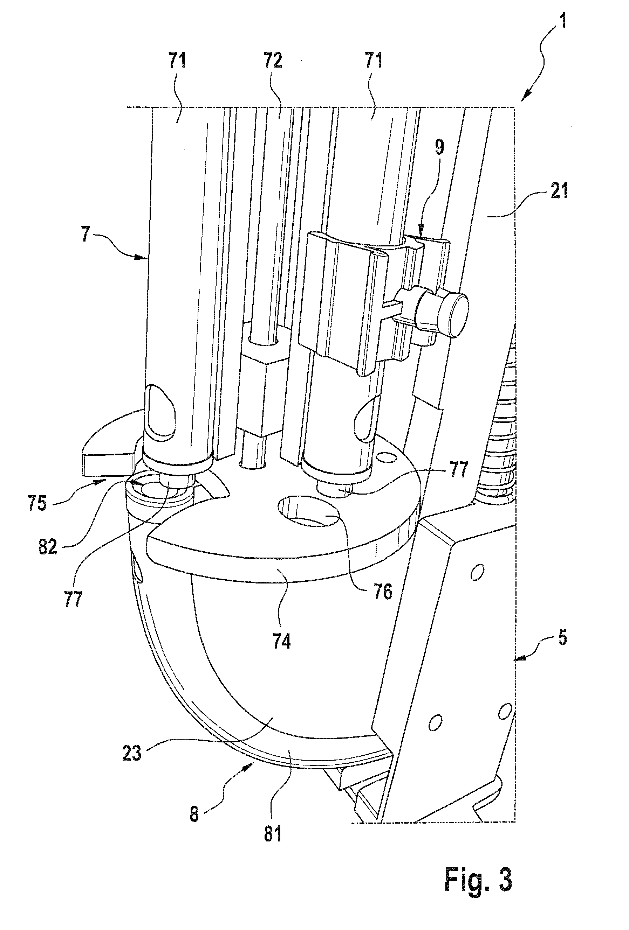

Das Magazin 7 weist ferner einen Magazinteller 74 auf, welcher in näherem Detail in Fig. 3 gezeigt ist. Der Magazinteller 74 ist feststehend am Magazinhalter 23 angeordnet und weist eine Telleraussparung 75 auf, an der eine Verbindung zwischen einem Magazinelement 71 und einem Zuführbogen 81 des Zuführabschnitts 8 herstellbar ist. In der in Fig. 3 gezeigten Stellung sind diese beiden Elemente jedoch nicht miteinander verrastet, um die Ausgestaltung der Elemente besser zu veranschaulichen. Der Magazinteller 74 weist ferner drei Löcher 76 in analoger Anordnung zu den Magazinelementen 71 auf, von denen in Fig. 3 nur eines zu sehen ist.

Zur Herstellung dieser Verbindung zwischen einem Magazinelement 71 und dem Zuführbogen 81 weist letzterer eine Vertiefung 82 auf, in der ein Vorsprung 77 an dem jeweiligen Magazinelement 71 formschlüssig einfügbar ist. Diese Situation ist in den

Fig. 1 und 2 ersichtlich. Die Vorsprünge 77 an den anderen Magazinelementen 71 kommen dann in den Löchern 76 zu liegen, so dass sich am ausgewählten Magazinelement 71 zum Zuführbogen 81 eine stufenlose Verbindung ergibt. Wie hieraus erkennbar ist, werden die vier miteinander gekoppelten Magazinelemente 71 des Magazins 7 zum Wechsel des Magazinelements 71 ein kleines Stück angehoben und dann verdreht.

Wie in Fig. 3 angedeutet ist, werden die Klammern 9 formschlüssig an den Magazinelementen 71 gelagert. Beispielhaft ist hier eine Klammer 9 an einem Magazinelement 71 gezeigt. Im Einsatz werden zu Beginn der Arbeiten sämtliche Magazinelemente 71 vollständig mit Klammern 9 gefüllt.

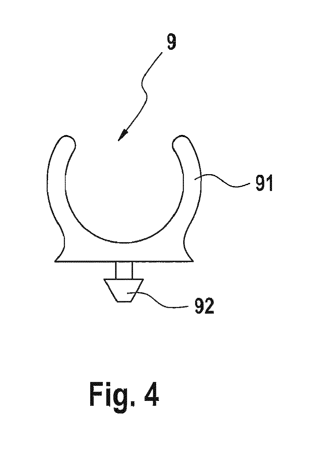

In Fig. 4 ist schematisch eine derartige Klammer 9 gezeigt. Diese weist einen Rastabschnitt 91 für Fußbodenheizungsrohre auf, der im Magazin 7 auch zum Halten an den Magazinelementen 71 dient. Ferner enthält die Klammer 9 einen Haltestift 92, der in ein Loch in einem Untergrund eingedrückt wird und die Klammer 9 dort fixiert.

Im Einsatz wird das Magazin 7 des Setzgeräts 1 zunächst in der Regel vollständig mit Klammern 9 befüllt. Die an dem ausgewählten und mit dem Zuführbogen 81 verbundenen Magazinelement 71 vorliegenden Klammern 9 gleiten dann schwerkraftbedingt über den Zuführbogen 81 hinab in den Aufnahmeraum 51, so dass die vorderste Klammer 9 unter dem Setzstempel an der Betätigungsstange 4 zu liegen kommt.

Das Setzgerät 1 wird dann auf dem Untergrund an die gewünschte Stelle verbracht und dort mittels der drei Führungsstifte 54 an dem Untergrund positioniert. Dabei werden die Führungsstifte 54 in drei ausgewählte Löcher am Untergrund eingeführt. Da die Köpfe 55 der Führungsstifte 54 beweglich am Setzabschnitt 5 gehalten sind, ist ein einfaches Einführen der Führungsstifte 54 in die zugeordneten Löcher am Untergrund möglich. Die Führungsstifte 54 fädeln hierbei in die entsprechenden Löcher ein und führen erforderlichenfalls geringe elastische oder federeleastische Ausweichbewegungen aus, um den Einfädelungsvorgang zu erleichtern. Hierzu sind die Führungsstifte 54 nicht starr in den jeweiligen Durchgangslöchern an der Auflageplatte 52 angeordnet, sondern mit einem gewissen geringem Spiel, so dass nicht nur eine axiale Verschiebbarkeit der Führungsstifte 54 gegeben ist, sondern auch Querbewegungen in gewissem Rahmen ausführbar sind.

Sobald das Setzgerät 1 hierdurch korrekt am Untergrund positioniert ist, wird der Handgriff 3 in Richtung zum Untergrund gedrückt. Über die Betätigungsstange 4 wird die im Aufnahmeraum 51 vorliegende Klammer 9 dann in den Untergrund eingedrückt. Durch die Widerhaken am Haltestift 92 ist die Klammer 9 dann zuverlässig am Untergrund fixiert.

Nach Beendigung der Druckbeaufschlagung auf den Handgriff 3 kehrt dieser aufgrund der Federvorspannung der Druckfeder 6 automatisch wieder in seine Grundstellung zurück. Am Zuführbogen 81 gleitet dann die nächste Klammer 9 an die vorbestimmte Position im Aufnahmeraum 51 vor. Das Setzgerät 1 wird nun wieder vom Untergrund abgehoben, wobei die Führungsstifte 54 aus den zugeordneten Löchern am Untergrund herausgeführt werden. Anschließend wird das Setzgerät 1 zur nächsten Stelle bewegt, an der eine Klammer 9 positioniert werden soll. Hier wiederholt sich dann der Setzvorgang in der oben beschriebenen Weise.

Die Erfindung lässt neben der erläuterten Ausführungsform weitere Gestaltungsansätze zu.

So ist es ferner auch möglich, dass das Magazin 7 anstelle von vier Magazinelementen 71 auch eine andere Anzahl an Magazinelementen aufweist. In sehr einfachen Ausführungsformen kann hier auch nur ein einzelnes Magazinelement vorgesehen sein, so dass die Verbindung zwischen dem dann einzigen Magazinelement 71 und dem Zuführbogen 81 nicht zwingend lösbar gestaltet sein muss. In anderen Varianten ist es auch denkbar, dass zwei oder drei Magazinelemente 71 vorgesehen sind. Um die Effizienz beim Setzen derartiger Klammern 9 zu erhöhen, ist es jedoch häufig gewünscht, dass eine möglichst große Anzahl an Magazinelementen 71 gegeben ist, damit die Arbeiten nicht zum Nachfüllen des Magazins 7 unterbrochen werden müssen. Daher stellen Magazine 7 mit fünf oder sechs Magazinelementen 71 vorteilhafte Alternativen dar.

Ferner ist es auch möglich, dass der Schaft 56 der Führungsstifte 54 in sich elastisch ausgebildet ist, so dass sich die Beweglichkeit der Köpfe 55 der Führungsstifte 54 weiter verbessert. Diese Variante kann auch an starr mit der Auflageplatte 52 verbundenen Führungsstiften vorgesehen sein, um so mit einer einfachen konstruktiven Gestalt gleichermaßen die erfindungsgemäßen Vorteile zu ermöglichen.

Zudem ist es auch möglich, auf eine axiale Verschiebbarkeit des Schafts 56 der Führungsstifte 54 am Setzabschnitt 5 zu verzichten.

Die Anzahl der Führungsstifte 54 ist ebenfalls nicht auf drei Stück begrenzt. In einer vereinfachten Ausführungsform reicht es durchaus auch, nur einen Führungsstift 54 oder zwei Führungsstifte 54 vorzusehen. Grundsätzlich wäre es auch möglich, eine größere Anzahl als drei Führungsstifte 54 anzuwenden, was jedoch mit Blick auf die Verarbeitung in der Regel keine weiteren besonderen Vorteile bringt.

Zur Betätigung des Setzgeräts 1 ist es dabei nicht unbedingt erforderlich, dass eine axial verschiebbare Betätigungsstange 4 vorgesehen ist. Vielmehr wäre es auch möglich, dass am Handgriff 3 ein Betätigungselement zum Beispiel nach Art eines Hebels gegeben ist, der über einen Seilzug oder einen anderen Mechanismus mit dem Setzabschnitt 5 verbunden ist und dort ein Auslösen des Setzstempels bewirken kann. Der Setzstempel muss dementsprechend nicht am unteren Ende der Betätigungsstange ausgebildet sein; er kann auch ein separates Teil sein, welches im Setzabschnitt 5 gelagert ist und durch die Betätigungsstange oder eben einem anderen Auslösemechanismus betätigt wird.

Die Gestalt der Klammern kann von der in Fig. 4 gezeigten abweichen; Hier können im Prinzip alle diesem System unterliegenden, in vielen Varianten auf dem Markt erhältlichen Klammernformen eingesetzt werden.

Zudem können die Klammern 9 auch zur Fixierung von anderen Installationsrohren als Fußbodenheizungsrohren eingesetzt werden.

## Patentansprüche

1. Setzgerät (1) für Klammern (9), welche zur Befestigung von Fußbodenheizungsrohren o. dgl. an einem Untergrund in Gestalt einer Lochplatte oder dgl. dienen, mit
einem Rahmen (2), welcher an einem Ende einen Handgriff (3) trägt und an seinem anderen Ende mit einem Setzabschnitt (5) verbunden ist,
einem Magazin (7) für eine Mehrzahl von Klammern (9),
einem Zuführabschnitt (8), mittels dem die Klammern (9) zum Setzabschnitt (5) zuführbar sind, und
einem Setzstempel zum Setzen der Klammern (9),
wobei vom Setzabschnitt (5) wenigstens ein Führungsstift (54) mit einem Kopf (55) zur Positionierung des Setzgeräts (1) am Untergrund übersteht,
**dadurch gekennzeichnet,**
**dass** der Kopf (55) des wenigstens einen Führungsstifts (54) gegenüber dem Setzabschnitt (5) beweglich ist.

2. Setzgerät nach Anspruch 1, **dadurch gekennzeichnet, dass** ein Schaft (56) des wenigstens einen Führungsstifts (54) elastisch ausgebildet ist.

3. Setzgerät nach Anspruch 1 oder 2, **dadurch gekennzeichnet, dass** der wenigstens eine Führungsstift (54) beweglich im Setzabschnitt (5) gelagert ist.

4. Setzgerät nach einem der Ansprüche 1 bis 3, **dadurch gekennzeichnet, dass** ein Schaft (56) des wenigstens einen Führungsstifts (54) axial verschiebbar im Setzabschnitt (5) gelagert ist, und dass der Kopf (55) des wenigstens einen Führungsstifts (54) federnd gegenüber einer Grundfläche des Setzabschnitts (5) vorgespannt ist.

5. Setzgerät nach einem der Ansprüche 1 bis 4, **dadurch gekennzeichnet, dass** wenigstens zwei Führungsstifte (54), insbesondere drei Führungsstifte (54), vom Setzabschnitt (5) überstehen, wobei deren Abstand und Zuordnung einem Raster im Untergrund angepasst sind.

6. Setzgerät nach einem der Ansprüche 1 bis 5, **dadurch gekennzeichnet, dass** der Setzstempel vom Handgriff (3) aus betätigbar ist, wobei der Handgriff (3) hierzu vorzugsweise mit einer Betätigungsstange (4) zusammenwirkt, welche am Rahmen (2) in Richtung zum Setzstempel axial verschiebbar gelagert ist.

7. Setzgerät nach Anspruch 6, **dadurch gekennzeichnet, dass** die Betätigungsstange (4) federnd entgegen der Betätigungsrichtung am Rahmen (2) vorgespannt ist.

8. Setzgerät nach einem der Ansprüche 1 bis 7, **dadurch gekennzeichnet, dass** das Magazin (7) mehrere, vorzugsweise vier, Magazinelemente (71) aufweist, welche abwechselnd mit dem Zuführabschnitt (8) verbindbar sind.

9. Setzgerät nach Anspruch 8, **dadurch gekennzeichnet, dass** die Magazinelemente (71) drehbar am Setzgerät (1) gelagert sind.

10. Verfahren zum Setzen von Klammern (9) zur Befestigung von Fußbodenheizungsrohren o. dgl. an einem Untergrund in Gestalt einer Lochplatte oder dgl., mittels dem Setzgerät (1) nach einem der Ansprüche 1 bis 9, mit den Schritten:
Füllen des Magazins (7) mit einer Mehrzahl von Klammern (9),
Positionieren des Setzgeräts (1) am Untergrund mit Hilfe von wenigstens einem Führungsstift (54), dessen Kopf (55) gegenüber dem Setzabschnitt (5) beweglich ist, so dass der Kopf (55) des wenigstens einen Führungsstifts (54) jeweils in ein Loch oder eine Vertiefung im Untergrund eingeführt wird, und
Setzen einer Klammer (9) durch Betätigung des Setzstempels.
